# EUROPÄISCHE PATENTSCHRIFT

(11) **EP 0 694 334 B1**
(45) Veröffentlichungstag und Bekanntmachung des Hinweises auf die Patenterteilung: **19.09.2001**
(21) Anmeldenummer: 95110898.4
(22) Anmeldetag: 12.07.1995
(51) Int. Cl.: B01L 3/14, B65D 47/08

(54) **Verdrehsicherung für Reagenzgefässe**
Rotation proof fastener for test tubes
Elément de blocage en rotation pour tubes à essais

(30) Priorität: 15.07.1994 DE 9411517 U
(43) Veröffentlichungstag der Anmeldung: 31.01.1996
(73) Patentinhaber: Roche Diagnostics GmbH, 68298 Mannheim (DE)
(72) Erfinder: Erb, Hermann, D-67136 Fussgönnheim (DE); Sattler, Stephan, D-82380 Peissenberg (DE); Wohland, Albert, D-68529 Viernheim (DE)

(56) Entgegenhaltungen:
- EP-A- 0 410 913
- WO-A-92/04275
- WO-A-94/04425
- WO-A-94/19452
- US-A- 4 753 358
- US-A- 4 805 772

## Beschreibung

Die Erfindung betrifft ein System zur Positionierung und Ablesung von Kennzeichnungen auf Reagenzgefäßen gemäß Anspruch 1.

Die Erfindung fällt in das Gebiet der klinischen Analyse, in dem es notwendig ist, daß Reagenzgefäße von einem Analysegerät anhand einer Kennung auf dem Gefäß sicher identifiziert werden können.

Im Stand der Technik sind bereits Ausführungsformen von Reagenzgefäßen bekannt, bei denen ein Verschlußteil auf einem Vorratsbehältnis befestigt wird. Ein Verdrehen von Verschlußteil und Vorratsbehältnis wurde bisher zum Beispiel durch eine Verklebung, Verschweißung oder Verschraubung der beiden Teile erreicht.

Aus der WO 94/04425 ist ein Gefäß bekannt, das sowohl ein Vorratsgefäß mit einer darauf angebrachten Kennzeichnung, sowie einen Verschluß besitzt, der auf das Vorratsbehältnis aufgeprellt ist. Ein Verdrehen von Verschluß und Vorratsbehältnis wird durch Erhebungen an den gegenüberliegenden Mantelflächen von Verschluß und Vorratsbehältnis verhindert. Ein entsprechendes System, bei dem ebenfalls eine Verdrehung von Verschlußteil und Vorratsbehältnis durch Erhebungen auf den anliegenden Mantelflächen verhindert wird, ist aus der EP B 0 410 913 bekannt.

Aus der US 4,805,772 ist ein System zur Positionierung und Ablesung von Kennzeichnungen auf Gefäßen bekannt. Bei dem in diesem US-Patent beschriebenen System wird ein Gefäß zunächst in einen Adapter eingestellt, der seinerseits wiederum in eine Aufnahmeposition eingesetzt wird. Bei dem in der US 4,805,772 beschriebenen Gefäß handelt es sich um ein einstückig ausgeführtes Reagenzgefäß, bei dem keine zweiteilige Anordnung aus einem Verschlußteil und einem Vorratsbehältnis vorliegt.

Aufgabe der vorliegenden Erfindung war es, Vorrichtungen, bzw. Maßnahmen vorzuschlagen, mit denen eine Verdrehung von Vorratsbehältnis und Verschlußteil verhindert werden kann und die preisgünstig, einfach zu realisieren und leicht in bestehende Herstellungsprozesse integrierbar sind.

Die Aufgabe wurde durch ein System gemäß Anspruch 1 gelöst..

Für benutzerfreundliche Analysegeräte ist es unabdingbar, daß das Analysegerät selbständig Gefäße identifizieren kann. Dies wird in der Regel durch einen ein- oder zweidimensionalen Strichcode, der auf dem Vorratsbehältnis angebracht ist, gewährleistet. Für eine sichere Ablesung der Strichcodes ist jedoch eine geeignete

Positionierung von Strichcode und Lesegerät zueinander notwendig. Bei der vorliegenden Erfindung wird dies erreicht, indem die Gefäße in dafür vorgesehene Aufnahmepositionen eines Analysegerätes eingestellt werden. Die Aufnahmepositionen und die Gefäße sind so aufeinander abgestimmt, daß das Einstellen des Gefäßes nur in einer definierten Orientierung erfolgen kann. Da für das Vorratsbehältnis in der Regel Gefäße mit hoher Symmetrie, d. h. rund oder viereckig eingesetzt werden, wird die Orientierung des Gefäßes durch das Verschlußteil vorgegeben. In der Praxis wird die Kennzeichnung am Vorratsbehältnis angebracht. Damit eine geeignete Positionierung der Kennzeichnung gewährleistet werden kann, muß sichergestellt werden, daß sich Vorratsbehältnis und Verschluß in einer definierten Position zueinander befinden, die nicht durch äußere Einwirkung veränderbar sein darf. Bei der vorliegenden Erfindung wird eine Verdrehung von Verschluß und Vorratsbehältnis durch Erhebungen an den aneinanderanliegenden Mantelflächen verhindert.

Unter Reagenzflüssigkeiten im Sinne der Erfindung sollen nicht nur Reagenzflüssigkeiten als solche, sondern auch Hilfsflüssigkeiten wie z. B. Standardlösungen, Detergenzlösungen, Spülflüssigkeiten usw. verstanden werden.

Vorratsbehältnisse im Sinne der Erfindung sind die im Stand der Technik bekannten Behältnisse für Reagenzflüssigkeiten. Dies sind in der Regel Glas- oder Kunststoffbehälter mit einem Fassungsvermögen von Bruchteilen eines Milliliters bis hin zu einigen zig Millilitern. Die Gefäße besitzen in der Regel einen runden oder viereckigen Querschnitt mit Abmessungen in der Größenordnung von Zentimetern. Erfindungsgemäße Gefäße besitzen weiterhin eine Öffnung an der Oberseite des Gefäßes, die senkrecht zur Längsachse des Gefäßes angeordnet ist. An der äußeren oder inneren Mantelfläche des Gefäßes in Nähe der Öffnung befinden sich erfindungsgemäß eine oder mehrere Erhöhungen.

Erfindungsgemäß bevorzugt ist es, wenn eine Vielzahl von Erhöhungen im Abstand von 0,5 bis 2 mm auf den Mantelflächen angebracht sind. Im allgemeinen wird diese Anordnung als Riffelung bezeichnet.

Eine Riffelung kann dadurch hervorgerufen sein, daß Vertiefungen gegenüber der Mantelfläche im Material bestehen oder das sich Materialteile oberhalb der Ebene der Mantelfläche befinden. Die Riffelungstiefe, d. h. der Abstand zwischen höchstem und tiefstem Punkt der Riffelung beträgt erfindungsgemäß bevorzugt zwischen 0,2 und 2 mm.

Es ist von Bedeutung, daß die Erhebungen auf der einen Mantelfläche in Vertiefungen auf der anderen Mantelfläche eingreifen, so daß eine gegenseitige Verdrehung der Mantelflächen gegeneinander gehindert wird. Im einfachsten Fall genügt zu diesem Zwecke eine einzelne Erhöhung, die in eine einzelne Vertiefung eingreift.

Zur Gewährleistung des gewünschten Effektes, d. h. zur Verhinderung einer Verdrehung von Verschlußteil und Vorratsbehältnis, sind die Materialerhebungen oder Materialvertiefungen auf der Umfangsfläche bevorzugt parallel zur Längsachse des Gefäßes ausgerichtet.

Der Verschluß kann ebenso wie das Vorratsbehältnis aus einem Kunststoff gefertigt sein. Der Verschluß besitzt einen unteren Teil, der auf das Vorratsbehältnis aufgeprellt wird und einen oberen Teil, der den eigentlichen Verschluß, d. h. einen Kippdeckel, Schraubdeckel, Stopfen oder dergleichen trägt.

Erfindungsgemäß befindet sich im unteren Teil des Verschlusses ebenfalls eine Mantelfläche, die eine Riffelung besitzt. Diese Riffelung ist so ausgebildet, daß die Erhebungen oder Vertiefungen parallel zur Längsachse des Gefäßes ausgerichtet sind. Bevorzugt ist die Riffelungstiefe am Vorratsbehältnis und am Verschlußteil gleich.

Erfindungsgemäß sind insbesondere zwei Ausführungsformen der Erfindung möglich. Bei der ersten Ausführungsform befindet sich die Riffelung des Vorratsbehältnisses auf der äußeren Umfangsfläche des Vorratsbehältnisses und die Riffelung des Verschlußteiles an einer inneren Umfangsfläche. Bei der zweiten Ausführungsform ist die Riffelung des Vorratsbehältnisses an der inneren Mantelfläche und die des Verschlußteiles außen.

Die aneinanderanliegenden Mantelflächen von Verschlußteil und Vorratsbehältnis, die die Riffelung tragen, sind so ausgebildet, daß sie dichtend aneinanderanliegen, wenn der Verschluß auf das Vorratsbehältnis aufgeprellt wurde. Zusätzlich zu den Riffelungen können auf den Mantelflächen, die aneinanderzuliegen kommen, Erhöhungen quer zur Längsachse des Gefäßes angebracht sein. Die Erhöhungen werden erfindungsgemäß so positioniert, daß die Erhöhung auf dem Vorratsbehältnis und die Erhöhung auf dem Verschluß beim Aufprellen des Verschlusses auf das Vorratsbehältnis aneinander vorbeigleiten müssen. Beim Aufprellen des Verschlusses wird demnach ein mechanischer Widerstand überwunden. Dies führt dazu, daß sich die Anordnung, bei der der Verschluß auf das Vorratsbehältnis aufgeprellt ist, in einer Rastposition befindet.

Die vorteilhafte Wirkung der Verdrehsicherung ergibt sich dann, wenn auf dem Gefäß, insbesondere auf dem Vorratsbehältnis Kennzeichnungen angebracht sind, die in irgendeiner Weise abgelesen werden müssen. Diese Kennzeichnungen betreffen beispielsweise den Gefäßinhalt, chargenspezifische Charakteristika, Haltbarkeitsdaten, Verwendungshinweise und gegebenenfalls Informationen zur Steuerung eines Analyseablaufes. Die genannten Kennzeichnungen und ihre technische Realisierung ist in dem Stand der Technik bereits bekannt. Für die Kennzeichnungen können beispielsweise ein- oder zweidimensionale Strichcodes, Magnetstreifen, RF-ID-Chips oder aufgedruckte alphanumerische Zeichen dienen.

Vorrichtungen zur Ablesung der genannten Kennzeichnungen und auch Analysegeräte, die geeignete Lesevorrichtungen enthalten, sind ebenfalls im Stand der Technik bekannt.

Eine für die Ablesung geeignete Positionierung der Gefäße im Analyseautomaten wird durch geeignete Aufnahmepositionen innerhalb des Analysegerätes ermöglicht. Verschlußteil des Gefäßes und Aufnahmeposition des Analysegerätes sind so aufeinander abgestimmt, daß das Gefäß nur in einer definierten Position in die Aufnahmeposition eingestellt werden kann.

Die Erfindung betrifft ein System zur Positionierung und Ablesung von Kennzeichnungen auf Reagenzgefäßen, beinhaltend
ein Analysegerät mit mindestens einer Aufnahmeposition für Reagenzgefäße und einem Lesegerät für Kennzeichnungen auf Reagenzgefäßen,
mindestens ein Reagenzgefäß mit einer darauf angebrachten Kennzeichnung und einem Verschluß, der auf das Vorratsbehältnis aufgeprellt ist, wobei entweder
eine innere Mantelfläche des Verschlusses und eine äußere Mantelfläche des Vorratsbehältnisses
oder
eine äußere Mantelfläche des Verschlusses und eine innere Mantelfläche des Vorratsbehältnisses dichtend aneinanderliegen und ein Verdrehen von Verschluß
und Vorratsbehältnis durch Erhöhungen, die sich an den aneinanderanliegenden Mantelflächen befinden, verhindert wird, wobei die Aufnahmeposition einen Schlitz besitzt, durch den eine Kennzeichnung eines in der Aufnahmeposition befindlichen Reagenzgefäßes mit dem Lesegerät abgelesen werden kann und die Aufnahmeposition weiterhin einen oberen Teil besitzt, der an die Form des Verschlusses des Reagenzgefäßes so angepaßt ist, daß ein Verdrehen des Gefäßes innerhalb der Aufnahmeposition verhindert ist.

Die Aufnahmeposition des Analysegerätes besitzt einen unteren Teil, der in der Regel einen zylindrischen Hohlraum darstellt und zur Aufnahme des Vorratsbehältnisses dient. Der obere Teil der Aufhahmeposition ist ein Hohlraum, der der Form des Verschlusses des Gefäßes angepaßt ist, so daß Verschluß und Aufnahmeposition miteinander fluchten. Die Aufnahmeposition des Analysegerätes muß jedoch nicht notwendigerweise eine ideal anliegende Umhüllung des Gefäßes darstellen. Im unteren Teil der Aufnahmeposition muß lediglich gewährleistet sein, daß ein ausreichender Hohlraum vorhanden ist, der das Vorratsbehältnis aufnehmen kann. Der obere Teil der Aufnahmeposition muß so beschaffen sein, daß er ein Verdrehen des Gefäßes innerhalb der Aufnahmeposition verhindert. Dies wird durch eine geeignete Formgebung von Verschluß und oberem Teil der Aufnahmeposition erreicht.

Der Verschluß des Gefäßes besitzt einen Querschnitt, der eine Symmetrie bezüglich der Längsachse des Gefäßes aufhebt. Dies kann beispielsweise durch einen runden Verschluß mit einer Lasche, einen trapezförmigen Verschluß und dergleichen erreicht werden.

Die Aufnahmeposition besitzt ein Fenster oder einen Schlitz, durch den ein Teil eines eingestellten Gefäßes zugänglich ist. Auf der Außenseite dieses Fensters oder Schlitzes befindet sich ein Lesegerät zur Ablesung von Kennzeichnungen auf einem Reagenzgefäß.

Als Lesegeräte sind im Stand der Technik bekannte Vorrichtungen wie Strichcodeleser, Magnetstreifenleser usw. verwendbar.

Aus der geschilderten Anordnung eines Gefäßes innerhalb der Aufnahmeposition geht hervor, daß die Kennzeichnung auf dem Gefäß so angebracht sein muß, daß sie durch das Fenster oder den Schlitz in der Aufnahmeposition zugänglich ist, wenn sich das Gefäß innerhalb der Aufnahmeposition befindet. Die Verdrehsicherung von Verschluß und Vorratsbehältnis durch die Riffelungen auf den anliegenden Wänden gewährleistet, daß sich Kennzeichnung auf dem Gefäß und Verschluß, der die Positionierung des Gefäßes innerhalb der Aufnahmeposition definiert, in einer vorbestimmten und gleichbleibenden Anordnung zueinander befinden.

Die Erfindung wird im folgenden anhand einiger Figuren näher erläutert.

### Figur 1

Aufsicht auf ein Gefäß mit geöffnetem Deckel.

### Figur 2

Querschnitt eines Gefäßes parallel zur Längsachse.

### Figur 3

Gefäß innerhalb der Aufnahmeposition eines Analysegerätes

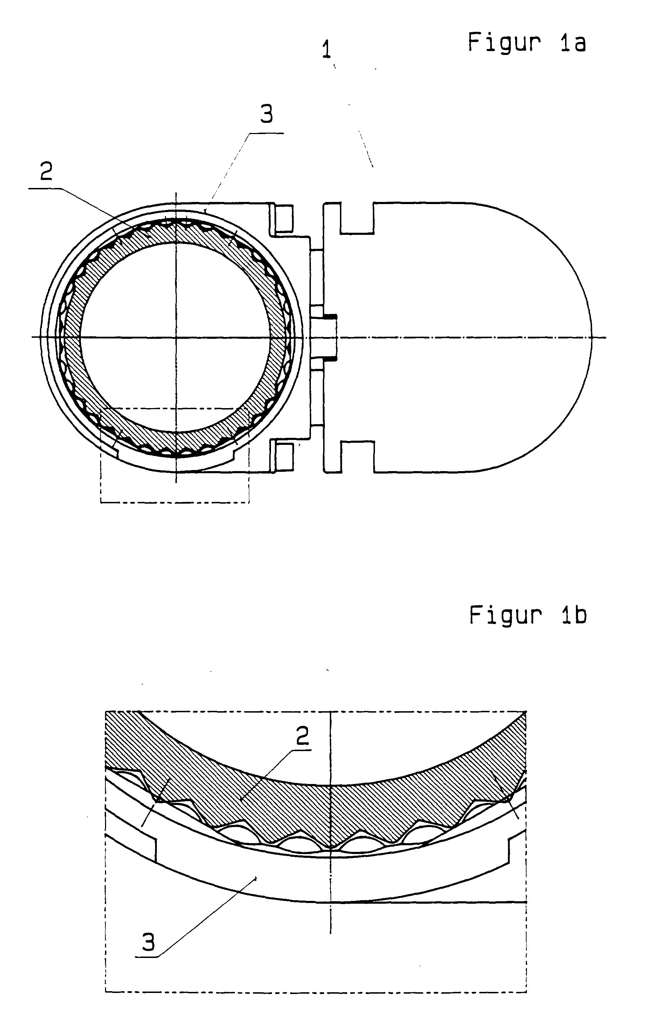

Figur 1 a zeigt den Querschnitt eines erfindungsgemäßen Gefäßes (1). Im dargestellten Fall befindet sich die Riffelung des Vorratsgefäßes (2) auf der äußeren Mantelfläche. Dementsprechend befindet sich die Riffelung des Verschlusses (3) auf einer inneren Mantelfläche. In Figur 1 b ist das Ineinandergreifen der beiden Riffelungen vergrößert dargestellt.

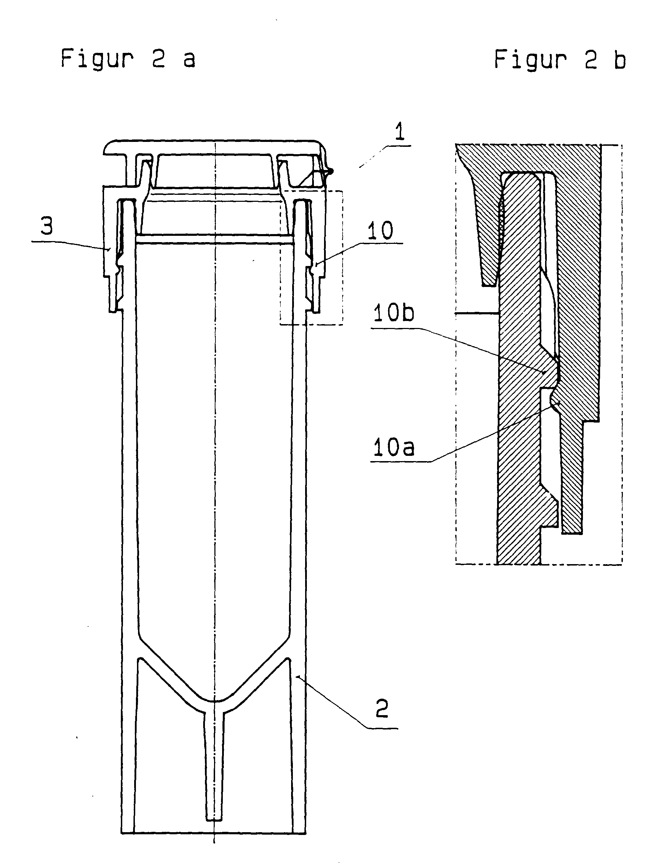

Figur 2 zeigt ein erfindungsgemäßes Gefäß im Querschnitt parallel zur Längsachse. Es ist insbesondere zu erkennen, daß sich die Riffelung des Vorratsgefäßes 2 lediglich am oberen Teil des Vorratsgefäßes befindet, der innerhalb des Verschlußteiles (3) gelegen ist. Die Riffelung des Verschlusses (3) befindet sich an der Innenwandung.

In Figur 2 sind ebenfalls Erhöhungen (10) quer zur Längsachse des Gefäßes zu erkennen. Figur 2 b zeigt eine Ausschnittsvergrößerung, in der die Erhöhungen detaillierter zu erkennen sind. Die Erhöhung (10 a) am Verschluß (3) befindet sich unterhalb der Riffelung, so daß zwischen Riffelung und Erhöhung (10a) ein Zwischenraum für die Erhöhung (10 b) des Vorratsgefäßes (2) verbleibt. Gefäß und Verschlußteil befinden sich demnach in einer Rastposition, aus der sie nur mit einem Kraftaufwand herausbewegt werden können, der die Erhöhungen (10a) und (10b) aneinander vorbeibewegt.

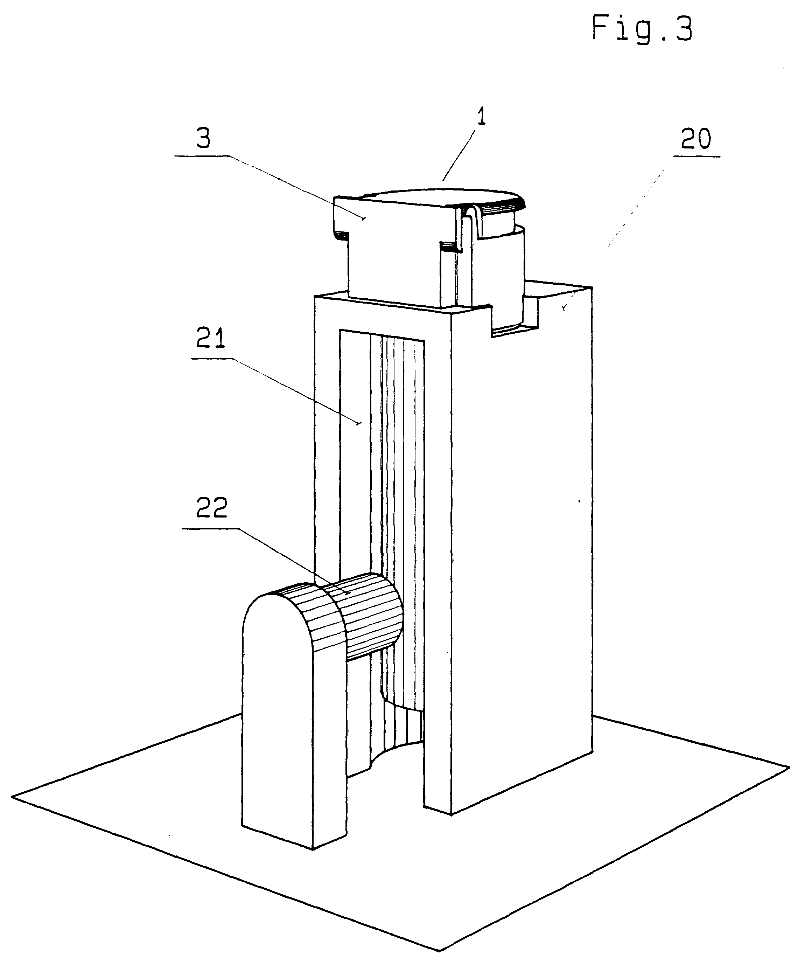

Figur 3 zeigt ein Gefäß (1) innerhalb der Aufnahmeposition (20) eines Analysegerätes. Das Verschlußteil (3) besitzt einen annähernd halbkreisförmigen Querschnitt, der von der Aufnahmeposition (20) so umgeben ist, daß eine Verdrehung des Gefäßes innerhalb der Aufnahmeposition unmöglich ist. Die Aufnahmeposition (20) besitzt weiterhin einen seitlichen Schlitz (21), durch den das

Gefäß sichtbar ist. Auf der dem Schlitz zugewandten Seite des Gefäßes befindet sich ein Strichcode auf dem Vorratsbehältnis. Der Strichcode wird durch einen Strichcodeleser (22) beim Einstellen des Gefäßes in die Aufnahmeposition (20) abgelesen.

### Bezugszeichenliste

- (1): Gefäß
- (2): Vorratsgefäß
- (3): Verschluß
- (10a): Erhöhung am Verschluß
- (10b): Erhöhung am Vorratsgefäß
- (20): Aufnahmeposition
- (21): Schlitz
- (22): Strichcodeleser

## Patentansprüche

1. System zur Positionierung und Ablesung von Kennzeichnungen auf Reagenzgefäßen (1), beinhaltend
- ein Analysegerät mit mindestens einer Aufnahmeposition (20) für Reagenzgefäße,
- ein Lesegerät (22) für Kennzeichnungen auf Reagenzgefäßen,
- mindestens ein Reagenzgefäß mit einer darauf angebrachten Kennzeichnung und einem Verschluß (3), der auf das Vorratsbehältnis aufgeprellt ist, wobei entweder
eine innere Mantelfläche des Verschlusses und eine äußere Mantelfläche des Vorratsbehältnisses oder
eine äußere Mantelfläche des Verschlusses und eine innere Mantelfläche des Vorratsbehältnisses dichtend aneinanderliegen und ein Verdrehen von Verschluß und Vorratsbehältnis durch Erhöhungen, die sich an den aneinanderliegenden Mantelflächen befinden, verhindert wird,
wobei die Aufhahmeposition einen Schlitz (21) besitzt, durch den eine Kennzeichnung eines in der Aufhahmeposition befindlichen Reagenzgefäßes mit dem Lesegerät abgelesen werden kann und die Aufhahmeposition weiterhin einen oberen Teil besitzt, der an die Form des Verschlusses des Reagenzgefäßes so angepaßt ist, daß ein Verdrehen des Gefäßes innerhalb der Aufnahmeposition verhindert ist.

2. System gemäß Anspruch 1, bei dem die Erhöhungen Riffelungen sind, die parallel zur Längsachse des Reagenzgefäßes ausgerichtet sind.

3. System gemäß Anspruch 1, bei dem die Kennzeichnung auf dem Vorratsbehältnis ein ein- oder zweidimensionaler Strichcode ist.

4. System gemäß Anspruch 1, bei dem auf den aneinanderliegenden Mantelflächen Erhöhungen quer zur Längsachse des Reagenzgefäßes angebracht sind, die beim Aufprellen des Verschlusses auf das Vorratsbehältnis überwunden werden.

5. System gemäß Anspruch 2, bei dem die Riffelungen auf den Mantelflächen Erhöhungen von 0,2 bis 2 mm sind.

## Claims

1. System for positioning and reading identification marks on reagent vessels (1), comprising
- an analytical instrument having at least one holding position (20) for reagent vessels,
- a reading device (22) for identification marks on reagent vessels,
- at least one reagent vessel having an identification mark attached thereto and a closure (3) which is snapped onto the storage vessel wherein either
an inner wall surface of the closure and an outer wall surface of the storage vessel or
an outer wall surface of the closure and an inner wall surface of the storage vessel fit tightly against each other and a twisting of the closure and storage vessel is prevented by projections that are located on the adjacent wall surfaces,
wherein the holding position has a slit (21) through which an identification mark of a reagent vessel located in the holding position can be read with the reading device and the holding position additionally has an upper part that is matched to the shape of the closure of the reagent vessel in such a manner that it prevents twisting of the vessel within the holding position.

2. System as claimed in claim 1, in which the projections are corrugations which are aligned parallel to the longitudinal axis of the reagent vessel.

3. System as claimed in claim 1, in which the identification mark on the storage vessel is a one-dimensional or two-dimensional bar code.

4. System as claimed in claim 1, in which projections are provided on the adjacent wall surfaces which have to be surmounted when the closure is snapped onto the storage vessel are attached at right angles to the longitudinal axis of the reagent vessel.

5. System as claimed in claim 2, in which the corrugations on the wall surfaces are projections of 0.2 to 2 mm.

## Revendications

1. Système de positionnement et de lecture de marquages sur des récipients à essais (1) comprenant
- un appareil d'analyse avec au moins une position de logement (20) pour récipients à essais,
- un appareil de lecture (22) de marquages situés sur des récipients à essais,
- au moins un récipient à essais avec un marquage appliqué dessus et un obturateur (3) qui s'appuie sur le récipient de stockage, dans lequel soit
une surface interne de l'obturateur et une surface externe du récipient de stockage, soit
une surface externe de l'obturateur et une surface interne du récipient de stockage se trouvent l'une contre l'autre de façon étanche et une torsion de l'obturateur et du récipient de stockage est empêchée par des bosses situées sur les surfaces se trouvant l'une contre l'autre,
dans lequel la position de logement possède une fente (21) à travers laquelle un marquage d'un récipient à essais se trouvant dans la position de logement peut être lu par l'appareil de lecture et la position de logement possède en outre une partie supérieure qui est adaptée à la forme de l'obturateur du récipient à essais de telle sorte qu'une torsion du récipient à l'intérieur de la position de logement est empêchée.

2. Système selon la revendication 1, dans lequel les bosses sont des cannelures qui sont orientées parallèlement à l'axe longitudinal du récipient à essais.

3. Système selon la revendication 1, dans lequel le marquage sur le récipient de stockage est un code à barres à une ou deux dimension(s).

4. Système selon la revendication 1, dans lequel, sur les surfaces se trouvant l'une contre l'autre, des bosses sont agencées transversalement par rapport à l'axe longitudinal du récipient à essais, lesquelles sont franchies lorsque l'obturateur est appuyé sur le récipient de stockage.

5. Système selon la revendication 2, dans lequel les cannelures situées sur les surfaces sont des bosses de 0,2 à 2 mm.
